# EUROPEAN PATENT SPECIFICATION

(11) **EP 2 507 421 B1**
(45) Date of publication and mention of the grant of the patent: **15.06.2016**
(21) Application number: 10834100.9
(22) Date of filing: 02.12.2010
(51) Int. Cl.: D01F 6/60, D01F 8/12, D02G 3/04, C08L 77/06, D02G 3/02

(54) **BIOBASED FIBRE AND YARN**
FASER UND GARN AUF BIOBASIS
FIBRE ET FIL À BASE BIOLOGIQUE

(30) Priority: 03.12.2009 AU 2009905912
(43) Date of publication of application: 10.10.2012
(73) Proprietor: Interface Aust Pty Limited, Surry Hills, NSW 2010 (AU); Universal Fibers, Inc., Bristol, VA 24202-3705 (US)
(72) Inventor: KESTNER, Larry, Allen, Saltville, VA 24370 (US); KHAN, Zulfiqar Anwar, Picton, NSW 2571 (AU)
(74) Representative: Adam, Holger
(86) International application number: PCT/AU2010/001632
(87) International publication number: WO 2011/066620

(56) References cited:
- WO-A1-02/051921
- DE-A1-102008 035 530
- GB-A- 535 070
- GB-A- 574 956
- GB-A- 969 991
- GB-A- 1 017 639
- GB-A- 1 105 856
- GB-A- 1 169 469
- GB-A- 1 171 263
- JP-A- 3 167 338
- JP-A- 63 159 522
- US-A- 3 328 951
- US-A- 3 649 603
- US-A- 3 659 989
- US-A- 4 457 974
- US-A- 4 584 240
- US-A- 5 723 568
- US-A- 5 843 574
- US-A1- 2003 080 463
- US-A1- 2003 080 463
- US-A1- 2006 202 397
- US-A1- 2008 167 415
- 'ULTRAMID BALANCE- NEWS RELEASE BASF', [Online] 16 October 2007, XP008157344 Retrieved from the Internet: <URL:http://www.plasticsportal.netlwa/plast icsEUen GB/portal/show/common/plasticsport...>

## Description

### Technical Field

The present invention relates to a biobased fibre and to a bulked continuous filament yarn formed from the biobased fibre.

### Background of the Invention

With the ongoing depletion of available and accessible petrochemical resources, there is an increasing need to develop materials which utilise chemicals derived from renewable resources. In particular there is a need in society for the provision of yarns and textiles which have the benefits of being prepared from polyamides, but which are manufactured utilising, at least partially, raw materials derived from renewable sources.

A biobased fibre is herein defined as a fibre comprised of a polymer, or a blend or alloy of two or more polymers, in which one or more of said polymers has as at least one of the components making up the macromolecule thereof a substance ultimately derived wholly or partially from a biological, renewable, source. Such source may, for example, be a plant, or part of said plant such as roots, stems, leaves, flowers or seeds.

WO 02/051921 A1 (Prisma Fibers, Inc.) describes blending of thermoplastic polyester with fiber-forming polyamide in the production of melt-colored melt-spun fibers.

US 2003/0080463 A1 (Harris et al) describes an apparatus and a continuous process for manufacturing a ring-dyed polymeric filament. A filament, formed by melt extrusion is directly fed into a tank containing a dye solution for a predetermined period of time. The resulting ring-dyed filament includes an outer cross-sectional region colored with the dye and an inner cross-sectional region not colored with the dye. The outer cross-sectional region may be of uniform thickness over the length of the filament. A quenching step can be performed either before or during the ring-dyeing step.

### Summary of the Invention

According to a first aspect of the present invention, there is provided a bulked continuous filament yarn comprising a plurality of continuous filaments; wherein the plurality of continuous filaments is formed from a biobased polyhexamethylene sebacamide polymer.

According to second aspect of the present invention, there is provided a process for preparing a biobased polyhexamethylene sebacamide bulked continuous filament (BCF) yarn comprising a plurality of continuous filaments, wherein the process comprises melt-spinning a polymer melt consisting of polyhexamethylene sebacamide polymer, and optionally a colourant selected from at least one pigment and/or polymer soluble dyestuff, optionally at least one stabiliser and optionally one or more of antistatics, antioxidants, antimicrobials, flameproofing agents, delustering agents, and lubricants; to form filaments, passing the filaments to a drawing stage where the filaments are drawn and lengthened to produce a yarn.

According to a third aspect of the present invention, there is provided a biobased polyhexamethylene sebacamide bulked continuous filament yarn prepared by the process of the second aspect.

### Definitions

The following are some definitions that may be helpful in understanding the description of the present invention. These are intended as general definitions and should in no way limit the scope of the present invention to those terms alone, but are put forth for a better understanding of the following description.

Unless the context requires otherwise or specifically stated to the contrary, integers, steps, or elements of the invention recited herein as singular integers, steps or elements clearly encompass both singular and plural forms of the recited integers, steps or elements.

Throughout this specification, unless the context requires otherwise, the word "comprise", or variations such as "comprises" or "comprising", will be understood to imply the inclusion of a stated step or element or integer or group of steps or elements or integers, but not the exclusion of any other step or element or integer or group of elements or integers. Thus, in the context of this specification, the term "comprising" means "including principally, but not necessarily solely".

The information provided herein and references cited are provided solely to assist the understanding of the reader, and do not constitute an admission that any of the references or information is prior art to the present invention.

The term "filament" or "filaments" means strands of extreme or indefinite length.

The term "yarn" means a collection of numerous filaments which may or may not be entangled, twisted or laid together.

The term "texturing" means any operation of filaments which results in crimping, looping or otherwise modifying such filaments to increase cover, resilience, bulk or to provide a different surface texture or hand. It follows that a "bulked continuous filament" is a filament which has been subjected to one or more "texturing" operation(s).

By "biobased" is meant that the relevant material is made from substances derived from living matter.

### Detailed Description of the Preferred Embodiments

The present invention provides a bulked continuous filament yarn comprising a plurality of continuous filaments; wherein the plurality of continuous filaments is formed from a biobased polyhexamethylene sebacamide polymer.

In this regard, the biobased polyhexamethylene sebacamide polymer is suitably Ultramid Balance 6,10 available from BASF. This material is a polyamide 6,10 based on over 60% on sebacic acid derived from castor oil, which is itself a renewable resource obtained from the seeds of *Ricinus Communis.* Suitably the polymer is 63% biobased.

There is also provided a process for preparing a biobased polyhexamethylene sebacamide bulked continuous filament (BCF) yarn comprising a plurality of continuous filaments, wherein the process comprises melt-spinning a polymer melt consisting of polyhexamethylene sebacamide polymer, and optionally a colourant selected from at least one pigment and/or polymer soluble dyestuff, optionally at least one stabiliser and optionally one or more of antistatics, antioxidants, antimicrobials, flameproofing agents, delustering agents, and lubricants; to form filaments, passing the filaments to a drawing stage where the filaments are drawn and lengthened to produce a yarn.

In one embodiment the process is conducted continuously. In another embodiment, the process is conducted as independent sequential operations.

Suitably the polymer melt may have a colourant dispersed therein prior to spinning, the colourant selected from at least one pigment and/or polymer soluble dyestuff. Alternatively, the resulting spun filaments, drawn filaments or bulked continuous yarn may be dyed. The at least one dispersed colourant may be any suitable pigment and may be chosen from organic and/or inorganic classes. In one embodiment the pigment is at least one pigment chosen from among: quinacridone magenta PR202, perylene red PR178, iron oxide red PR101, zinc iron yellow PY119, nickel azo yellow PY150, phthalocyanine green PG7, phthalocyanine blue PB15:1, titanium dioxide PW6 and carbon black PBlk7. The range of colourant to be added is typically bounded by a functional minimum below which appearance or lightfastness is unsuitable or a functional maximum at which chromatic saturation is achieved. While different for each of the aforenamed inorganic and organic colourants, a typical minimum of 0.05wt% and a typical maximum of 2.5wt% may be encountered.

Suitably the polymer melt includes at least one stabiliser. In this regard, the stabiliser may be any suitable stabiliser. In one embodiment the stabiliser is a mixture of cuprous iodide, potassium iodide and potassium bromide or other suitable stabiliser. Other suitable stabilisers included members of the benzatriazole or hindered amine families. In one embodiment cuprous cation may be included in a range between 10 and 100 ppm. In another embodiment halide anion may be included in the range between 100 and 5000 ppm. In another embodiment benzatriazole or hindered amines may be included in the range of 0.1 to 2.0wt%.

Other optional additives which may be added to the polymeric melt include, but are not limited to, one or more of antistatics, antioxidants, antimicrobials, flameproofing agents, delustering agents, and lubricants.

Any or all of the above colourants, stabilisers and additives may be incorporated into the polymer melt by direct metering. Any or all of the above colourants, stabilisers and additives may be incorporated into the polymer melt in the form of a masterbatch, which term is well known to those skilled in the art. The carrier resin for use in the masterbatch is preferably the same polymer as that forming the continuous filaments but may also be any fibre-forming polymer fully miscible with the biobased polyhexamethylene sebacamide. Resins such as functionally modified polyesters and functionally modified or unmodified polyamides such as Nylon 6,6 and Nylon 6, 12 may also be used as carrier resin. Suitably, the colourants and/or stabilisers and/or additives are compounded into the carrier so that they are suitably dispersed. The colourants and/or stabilisers and/or additives and the prepared masterbatch are suitably dried to a moisture content of less than 0.2wt%.

The speed and temperature of the process is suitably chosen to optimise the physical properties of the formed fibre whilst maximising throughput economics.

Suitably the spin speed of the polymeric melt is about 400 m/min - 1500 m/min, for example about 1100m/min. In one embodiment an extruder supplies molten polymeric material to a spinning head, the spinning head including spinnerettes having multiple small orifices through which the molten polymer material is extruded to form filaments which are then suitably passed to a quench chamber where a quench gas (such as air, steam or an inert gas such as nitrogen) is provided to cool and solidify the filaments. Suitably the quench gas is directed at the filaments in a direction perpendicular to the filament travel.

Suitably the filaments are converged into a multifilament yarn prior to passing the yarn through the drawing stage. Suitably drawing is either over a contact point or around a roll. In this regard typically drawing is conducted on separated pairs of godet rolls or pairs (duos) operating at different rotational speeds. The filaments are drawn between the rolls at a desired draw ratio dependent on the speed differential, yarn temperature and yarn speed. The rolls are suitably heated to the same or similar temperature to elevate the filament temperature prior to texturing. In one embodiment the fibre is subjected to orientation through drawing and by allowing for crystalline growth and morphological alignment for example by allowing the fibre to dwell in repetitive transitory residence across at least one roller which may anisotropically orient the molecules in the filament thereby improving lateral strength.

Suitably the draw ratio is 2:1 to 4:1, more preferably the draw ratio is approximately 3 or below. Suitably, the filament is passed into the drawing stage at a speed of 1500 m/min or less, exiting at the described multiple speed thereof, whereby texturing may be practically accomplished.

Suitably texturing is conducted by means of a fluid jet texturing unit and the filament is fed into the unit at a rate faster than the rate at which the textured yarn is drawn off. Alternatively texturing is conducted by means of mechanical crimping. Suitably the texturing increases the bulk of the fibre. Texturing imparted is suitably sufficient to induce dry heat shrinkage in excess of the linear shrinkage solely induced by orientation. Following texturing the yarn may be allowed to equilibrate naturally or in an accelerated manner by applying a moist heat environment.

At some suitable stage during the aforementioned processes, yarn is brought into contact with a finish applicator whereby a liquid finish is applied as desired. The finish may be applied at a single point or in multiple stages.

The textured or textured and finished yarn may be suitably combined with other yarns of the same or different type to form larger assemblies through air entanglement (such as on a Gilbos unit or one of suitable design) or through cable twisting, air twisting or braiding to form a finished yarn of the required design and aesthetic requirements.

The textured or textured and finished yarn may then be wound onto a package.

The above process steps may be conducted in a continuous sequence or may be conducted separately. Preferably the process steps are conducted in an uninterrupted sequence.

Typically, but without limitation, each yarn will have a denier of 15 to 21, a tenacity of 2.5 to 3.5 grams/denier and an elongation to break of greater than 30%.

There is also provided a biobased polyhexamethylene sebacamide bulked continuous filament yarn prepared by the process and articles such as functional or decorative textiles and clothing formed from the yarn.

### EXAMPLES

### Example 1

Ultramid Balance® biobased nylon 6,10 resin available from BASF was dried, melt spun, drawn and air-jet textured to produce bulked continuous filament yarns of 1000 denier containing 60 filaments of tri-lobe cross-section. Four coloured yarns were produced via the addition during the melt spinning stage of formulated masterbatches containing various pigments. The four colours were dark brown ("Raisin"), light grey ("Hawk Grey"), medium grey ("Elephant") and dark grey ("Seal"). The spin speed was 1100 m/ min with a draw ratio of about 2.7:1. Finish oil was applied to the yarn during the spinning stage to give about 0.45%wt finish on yarn. The tenacities and elongations to break of the four yarns produced were as follows:

| Yarn Colour | Tenacity/ g/ denier | % Elongation at break |
|---|---|---|
| Raisin | 3.19 | 76 |
| Hawk Grey | 3.18 | 81 |
| Elephant | 3.15 | 73 |
| Seal | 3.04 | 73 |

### Example 2 (for reference only)

A yarn comprising 90% wt of the 6,10 resin used in Example 1 and 10% of a nylon 6,6 resin with a sulfuric acid relative solution viscosity of 3.1 was produced using a similar process to Example 1. The nylon 6,10 and the nylon 6,6 were melt blended during the melt spinning stage. The bulked continuous yarn produced had a denier of 600 g and consisted of 30 filaments of a tri-lobe cross-section.

## Claims

1. A bulked continuous filament yarn comprising a plurality of continuous filaments; wherein the plurality of continuous filaments is formed from a biobased polyhexamethylene sebacamide polymer.

2. A process for preparing a biobased polyhexamethylene sebacamide bulked continuous filament (BCF) yarn comprising a plurality of continuous filaments, wherein the process comprises melt-spinning a polymer melt consisting of polyhexamethylene sebacamide polymer, and optionally a colourant selected from at least one pigment and/or polymer soluble dyestuff, optionally at least one stabiliser and optionally one or more of antistatics, antioxidants, antimicrobials, flameproofing agents, delustering agents, and lubricants; to form filaments, passing the filaments to a drawing stage where the filaments are drawn and lengthened to produce a yarn.

3. The process according to claim 2 wherein the colourant includes at least one pigment or polymer soluble dyestuff.

4. The process according to claim 2 or 3 wherein the polymer melt includes at least one stabiliser.

5. The process according to claim 2 wherein after the drawing and lengthening, the filament is textured to produce a bulked continuous filament (BCF) yarn.

6. A biobased polyhexamethylene sebacamide bulked continuous filament yarn prepared by the process of claim 2.

## Patentansprüche

1. Endlosfilament-Bauschgarn, das eine Vielzahl von Endlosfilamenten umfasst; wobei die Vielzahl von Endlosfilamenten aus einem biobasierten Polyhexamethylensebacamidpolymer gebildet ist.

2. Verfahren zur Herstellung eines biobasierten Polyhexamethylensebacamid-Endlosfilament (bulked continuous filament (BCF))-Garns, das eine Vielzahl von Endlosfilamenten umfasst, wobei das Verfahren Schmelzspinnen einer Polymerschmelze, die aus Polyhexamethylensebacamidpolymer und gegebenenfalls einem Färbemittel, ausgewählt aus wenigstens einem Pigment und/oder polymerlöslichen Farbstoff, gegebenenfalls wenigstens einem Stabilisator und gegebenenfalls einem oder mehreren von Antistatika, Antioxidantien, antimikrobiellen Mitteln, schwer entflammbaren Mitteln, Mattierungsmitteln und Schmiermitteln besteht, um Filamente zu bilden, Bringen der Filamente zu einer Ziehstufe, wo die Filamente gezogen und verlängert werden, um ein Garn zu produzieren.

3. Verfahren gemäß Anspruch 2, wobei das Färbemittel wenigstens ein Pigment oder einen polymerlöslichen Farbstoff enthält.

4. Verfahren gemäß Anspruch 2 oder 3, wobei die Polymerschmelze wenigstens einen Stabilisator umfasst.

5. Verfahren gemäß Anspruch 2, wobei das Filament nach dem Ziehen und Verlängern texturiert wird, um ein Endlosfilament-Bauschgarn (BCF) herzustellen.

6. Biobasiertes Polyhexamethylensebacamid-Endlosfilament-Bauschgarn, das nach dem Verfahren gemäß Anspruch 2 hergestellt wird.

## Revendications

1. Fil de filaments continus gonflants comprenant une pluralité de filaments continus ; dans lequel la pluralité de filaments continus est formée à partir d'un polymère de polyhexaméthylène sébacamide d'origine biologique.

2. Procédé de préparation d'un fil de filaments continus gonflants (BCF) à base de polyhexaméthylène sébacamide d'origine biologique comprenant une pluralité de filaments continus, dans lequel le procédé comprend le filage par fusion d'une masse polymère fondue consistant en un polymère de polyhexaméthylène sébacamide, et facultativement un colorant choisi parmi au moins un pigment et/ou une teinture soluble dans les polymères, facultativement au moins un agent de stabilisation et facultativement un ou plusieurs agents antistatiques, antioxydants, antimicrobiens, agents ignifuges, agents délustrants et lubrifiants ; pour former des filaments, le passage des filaments dans un étage d'étirage où les filaments sont étirés et allongés pour produire un fil.

3. Procédé selon la revendication 2, dans lequel le colorant comprend au moins un pigment ou une teinture soluble dans les polymères.

4. Procédé selon la revendication 2 ou 3, dans lequel la masse polymère fondue comprend au moins un agent de stabilisation.

5. Procédé selon la revendication 2, dans lequel, après l'étirage et l'allongement, le filament est texture pour produire un fil de filaments continus gonflants (BCF).

6. Fil de filaments continus gonflants à base de polyhexaméthylène sébacamide d'origine biologique, préparé par le procédé selon la revendication 2.
